# FASCICULE DE BREVET EUROPEEN

(11) **EP 1 582 482 B1**
(45) Date de publication et mention de la délivrance du brevet: **18.08.2010**
(21) Numéro de dépôt: 05290657.5
(22) Date de dépôt: 25.03.2005
(51) Int. Cl.: B65G 21/10

(54) **Dispositif pour faire pivoter un convoyeur**
Drehvorrichtung für einen Förderer
Conveyor rotating device

(30) Priorité: 29.03.2004 FR 0403210
(43) Date de publication de la demande: 05.10.2005
(73) Titulaire: Theam, 44340 Bouguenais (FR)
(72) Inventeur: Levesque, Henri-Bruno, 44000 Nantes (FR)
(74) Mandataire: Colas, Jean-Pierre

(56) Documents cités:
- EP-A- 0 343 751
- EP-A- 0 654 427
- CA-A- 955 242
- US-A- 1 785 402
- US-A- 2 208 269
- US-A- 3 863 783
- US-A- 5 498 119
- US-A1- 2002 174 795

## Description

La présente invention se rapporte à un dispositif pour faire pivoter un convoyeur, à un convoyeur équipé d'un tel dispositif, et à un véhicule du type bétonnière équipé d'un tel convoyeur.

On connaît de la technique antérieure un dispositif pour faire pivoter un convoyeur autour d'un axe sensiblement vertical (voir p.e. le document US-A-5498119), comprenant :
- un bras de support dudit convoyeur,
- un palier d'axe sensiblement vertical monté sur ledit bras de support et apte à recevoir une embase de section circulaire dudit convoyeur,
- un pignon de même axe que celui dudit palier, apte à être monté rotatif dans ledit bras de support et fixe en rotation sur ledit axe vertical de support dudit convoyeur,
- une chaîne s'enroulant autour dudit pignon, et
- des moyens pour tirer sélectivement sur ladite chaîne dans un sens ou dans l'autre.

Un tel dispositif, destiné notamment à équiper un convoyeur monté sur un véhicule du type bétonnière, permet d'orienter convenablement le convoyeur afin le livrer le béton frais à un endroit souhaité sur un chantier.

Un tel dispositif s'est toutefois avéré très dangereux en cas de rupture de la chaîne.

Dans ce cas en effet, la chaîne, en se libérant des contraintes auxquelles elle était soumise, effectue un violent coup de fouet susceptible de faucher notamment le personnel situé à proximité du dispositif.

La présente invention a notamment pour but de supprimer ce danger.

On atteint ce but de l'invention avec un dispositif pour faire pivoter un convoyeur autour d'un axe sensiblement vertical, comprenant :
- un bras de support dudit convoyeur,
- un palier d'axe sensiblement vertical monté sur ledit bras de support et apte à recevoir une embase de section circulaire dudit convoyeur,
- un pignon de même axe que celui dudit palier, apte à être monté rotatif dans ledit bras de support et fixe en rotation sur ledit axe vertical de support dudit convoyeur,
- une chaîne s'enroulant autour dudit pignon,
- des moyens pour tirer sélectivement sur ladite chaîne dans un sens ou dans l'autre,
- un carter de protection de ladite chaîne.

Grâce à la présence d'un carter de protection de la chaîne, cette dernière se trouve en quelque sorte emprisonnée dans le bras de support du dispositif, et elle ne peut plus effectuer de coup de fouet en cas de rupture.

Suivant d'autres caractéristiques optionnelles du dispositif selon l'invention :
- ledit bras de support comprend une gorge à l'intérieur de laquelle ladite chaîne est susceptible de circuler, et ledit carter recouvre ladite gorge et ledit pignon,
- ledit dispositif comprend une butée fixe disposée dans l'espace sans chaîne séparant ledit bras de support dudit pignon, au voisinage des dents de ce pignon.

Grâce à cette dernière caractéristique, en cas de rupture, la chaîne ne peut pas s'enrouler autour du pignon. Comme de plus, en raison de la présence du carter de protection, elle ne peut pas quitter le pignon, il en résulte que ce pignon est bloqué en rotation par la chaîne, et donc que le mouvement de rotation du convoyeur autour d'un axe vertical est bloqué.

Ceci permet de s'affranchir d'un mouvement de rotation incontrôlé du convoyeur en cas de rupture de la chaîne.

Suivant encore d'autres caractéristiques du dispositif selon la présente invention :
- ledit pignon comprend deux rangées de dents et ladite chaîne est adaptée pour coopérer simultanément avec lesdites deux rangées de dents,
- ladite butée fixe est disposée entre lesdites deux rangées de dents,
- lesdits moyens de traction sélective comprennent deux vérins aptes à exercer des efforts de traction antagonistes sur ladite chaîne,
- ledit dispositif comprend un portique de liaison dudit bras de support à un véhicule du type bétonnière, sur lequel ledit bras est monté pivotant autour d'un axe vertical, et des moyens pour faire pivoter sélectivement ledit bras de support par rapport audit portique.

La présente invention se rapporte également à un convoyeur équipé d'un dispositif conforme à ce qui précède.

La présente invention se rapporte également à un véhicule du type bétonnière équipé d'un convoyeur conforme à ce qui précède.

D'autres caractéristiques et avantages de la présente invention apparaîtront à la lumière de la description qui va suivre et à l'examen des figures du dessin annexé dans lequel :
- la figure 1 représente une vue de côté d'un véhicule du type bétonnière équipé d'un convoyeur en position de transport,
- la figure 2 représente une vue de derrière de ce véhicule, le convoyeur étant déployé en position de travail,
- la figure 3 est une vue en perspective de ce convoyeur ainsi que du bras de support et du portique qui le relie à la bétonnière,
- la figure 4 est une vue en perspective du deuxième élément du châssis du convoyeur de la figure 2, pris isolément,
- la figure 5 est une vue analogue à celle de la figure 4, une partie du deuxième élément ayant été coupée et retirée de manière à montrer la structure interne de cet élément,
- la figure 6 est une vue en perspective du dispositif permettant de faire pivoter le convoyeur autour d'un axe sensiblement vertical,
- la figure 7 est une vue en perspective de ce même dispositif, prise sous un autre angle et avec enlèvement d'un carter de protection, et
- la figure 8 est une vue en perspective en coupe longitudinale de ce dispositif.

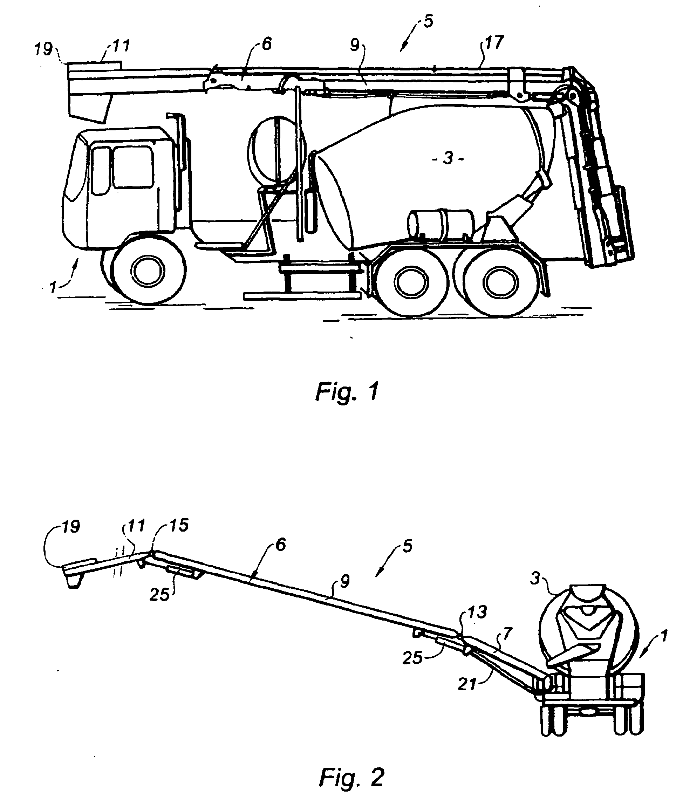

On se reporte à présent à la figure 1 sur laquelle on a représenté un véhicule du type bétonnière comprenant, comme cela est connu en soi, une toupie 3 permettant de malaxer un matériau tel que du béton frais.

Ce véhicule 1 est équipé d'un convoyeur 5 comprenant typiquement, comme cela est visible sur les figures 1 et 2, un châssis 6 formé d'une pluralité d'éléments rigides 7, 9, 11 articulés entre eux autour d'axes sensiblement verticaux 13, 15.

Une bande transporteuse continue 17 s'étend sur le dessus et le dessous du châssis 6 et est entraînée par des moyens de déplacement non représentés de manière à transporter du béton frais sortant de la toupie 3 jusqu'à l'extrémité libre 19 du convoyeur sur un emplacement approprié d'un chantier.

Le premier élément 7 de ce convoyeur est lui-même monté mobile autour d'un axe sensiblement vertical et autour d'un axe sensiblement vertical par rapport au véhicule 1.

Comme cela est connu en soi, des moyens de vérin 21, 23, 25 permettent de faire passer le convoyeur 5 de la position de transport visible sur la figure 1 à la position de travail visible sur la figure 2, et inversement.

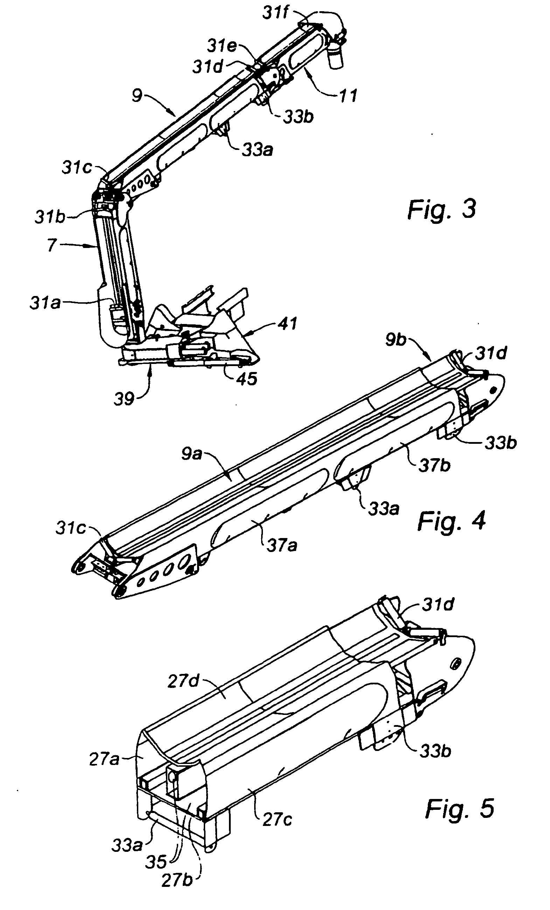

On se reporte à présent plus particulièrement aux figures 3 à 5 sur lesquelles on peut voir de manière plus détaillée la structure du châssis 6 du convoyeur 5.

Comme cela apparaît clairement sur la figure 5, la structure de ce châssis est du type en caisson fermé.

Ceci signifie qu'au moins l'un des trois éléments 7, 9, 11 présente une section transversale creuse délimitée par quatre parois 27a, 27b, 27c, 27d.

Comme on peut le voir sur la figure 5, la paroi supérieure 27d est conformée en auge, c'est-à-dire qu'elle définit une sorte de gouttière apte à recevoir et à guider la bande transporteuse non représentée sur les figures 3 à 5 mais portant la référence 17 sur la figure 1.

Seul le deuxième élément 9 a été représenté sur les figures 4 et 5, mais il va de soi que les trois éléments 7, 9 et 11 du convoyeur peuvent présenter une structure en caisson analogue à celle qui vient d'être décrite.

On notera également que sur les figures 3 à 5 on a représenté un convoyeur ayant pour particularité que ses deuxième 9 et troisième 11 éléments sont télescopiques.

Ce résultat est obtenu grâce au fait que chacun de ces éléments se compose en fait de deux parties en caisson fermé montées télescopiques l'une dans l'autre.

Bien entendu, la présente invention s'étend également à un convoyeur n'ayant qu'un seul ou pas du tout d'élément télescopique, et ayant plus ou moins de trois éléments articulés entre eux.

On notera avantageusement que des rouleaux 31 a à 31f de support de la bande transporteuse ne sont prévus, sur la partie supérieure du convoyeur, que dans les régions d'extrémité de chacun des éléments 7 à 11.

On prévoit également des rouleaux 33a, 33b disposés sous le convoyeur pour le retour de la bande transporteuse.

Comme on peut le remarquer avantageusement sur la figure 5, des éléments de commande hydraulique 35 des mouvements télescopiques et d'articulation du convoyeur peuvent être logés dans l'espace creux défini par les caissons formant les éléments 7 à 11.

Les éléments de commande hydraulique 35 peuvent comprendre typiquement des vérins hydrauliques et des conduites de commande.

L'essentiel de la structure des éléments 7, 9, 11 peut être formé dans un alliage métallique léger par exemple à base d'aluminium.

On peut en outre prévoir, sur les côté de ces éléments, des ajourements susceptibles d'être occultés par des carters 37a, 37b (voir figure 4) formés dans des matériaux légers tels que des matériaux composites.

Comme on peut le comprendre à la lumière de ce qui précède, la structure en caisson fermé du châssis 6 du convoyeur 5 confère à ce dernier une résistance nettement supérieure à celle d'un châssis classique.

Ainsi, pour une dimension donnée, le convoyeur 5 peut avoir un châssis 6 nettement allégé.

En outre, la forme en auge de la partie supérieure 27d (voir figure 5) du caisson permet de recevoir et guider la bande transporteuse sans qu'il soit nécessaire de recourir à des systèmes de rouleaux comme c'est le cas dans les convoyeurs de la technique antérieure.

On peut donc se contenter des rouleaux aux extrémités de chacun des éléments 7, 9, 11, ce qui contribue à l'allègement du châssis 6, et donc à l'augmentation de la charge utile du convoyeur 5 et à la réduction du gabarit des moyens d'actionnement 21, 23, 25 (voir figure 2) de ce convoyeur.

De plus, comme cela a été montré sur la figure 5, la structure en caisson permet de loger les organes 35, et ainsi de protéger ces organes tout en améliorant l'esthétique du convoyeur par rapport à un convoyeur classique.

On notera que le fait de prévoir une structure en alliage de métal léger, et/ou de prévoir des ajourements occultés par des carters en matériau composite, contribue également à l'allègement général du châssis 6 du convoyeur.

Le convoyeur qui vient d'être décrit permet un gain de poids d'environ 500 à 700 kilos par rapport à un convoyeur classique, augmentant d'autant la charge utile disponible.

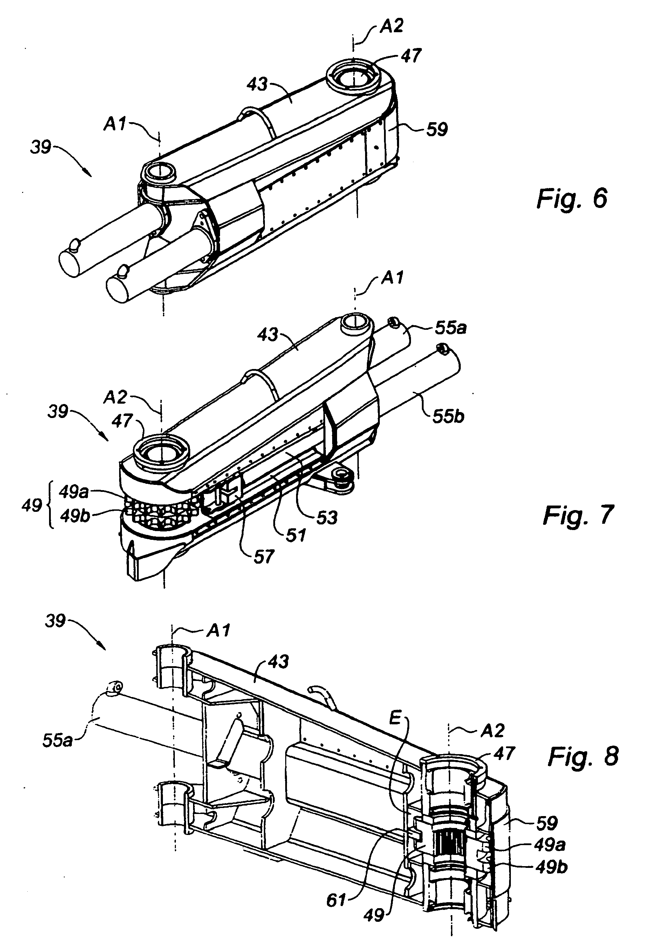

On se reporte à présent aux figures 6 à 8 sur lesquelles on a représenté un dispositif 39 permettant de faire pivoter le convoyeur qui vient d'être décrit autour d'un axe sensiblement vertical.

Il va cependant de soi que ce dispositif 39 pourrait convenir à tout autre type de convoyeur de la technique antérieure.

La figure 3 indique l'emplacement de ce dispositif 39 par rapport au convoyeur 5.

Comme cela apparaît sur cette figure, ce dispositif 39 est destiné à être interposé entre le premier élément 7 de ce convoyeur et un portique 41 destiné à être fixé sur le véhicule 1.

Ce dispositif 39 comprend un bras de support 43 destiné à être monté rotatif sur le portique 41 autour d'un axe sensiblement vertical A1.

La mise en rotation du bras de support 43 par rapport au portique 41 est effectuée au moyen d'un vérin à double effet 45 visible sur la figure 3.

A son autre extrémité, le bras de support 43 comporte un palier 47 d'axe A2 sensiblement vertical apte à recevoir une embase de section circulaire reliée au premier élément 7 du convoyeur.

Comme cela est visible sur les figures 7 et 8, un pignon 49 de même axe A2 que celui du palier 47 est monté rotatif à l'intérieur du bras de support 43.

Ce pignon 49 comporte de préférence deux rangées de dents 49a et 49b.

Le bras de support 43 comporte sur chacun de ses côtés une gorge 51 (voir figure 7).

Dans chacune des gorges 51 s'étend la tige 53 d'un vérin respectif 55a, 55b.

A l'extrémité libre de chacune de ces tiges se trouvent des moyens de fixation 57 permettant de relier ces tiges 51 à une chaîne non représentée.

Cette chaîne s'étend donc entre les moyens de fixation 57 de chacun des vérins 55a, 55b, en s'enroulant autour du pignon 49.

Lorsque ce pignon 49 comporte deux rangées de dents 49a, 49b comme cela est représenté, la chaîne correspondante est évidemment adaptée pour coopérer à la fois avec ces deux rangées de dents.

Comme cela est visible sur les figures 6 et 8, un carter de protection 59 formé par exemple dans un alliage métallique s'étend autour du bras de support 43 de manière à recouvrir les gorges 51 et le pignon 49, enfermant par là même la chaîne à l'intérieur du bras de support 43.

Une butée fixe 61 est disposée dans l'espace E sans chaîne (la chaîne ne s'enroule que sur la partie du pignon 49 située vers l'extérieur du bras de support 43) séparant le bras de support 43 du pignon 49, au voisinage des dents 49a, 49b de ce pignon.

De préférence, comme cela est représenté sur la figure 8, la butée fixe 61 est disposée entre les deux rangées de dents 49a, 49b du pignon 49.

Comme on peut le comprendre à la lumière de ce qui précède, les deux vérins 55a, 55b sont susceptibles d'exercer des efforts de traction antagoniste sur la chaîne qui passe autour du pignon 49, permettant ainsi d'entraîner en rotation autour d'un axe sensiblement vertical A2 le premier élément 7 du convoyeur 5, et donc par là même l'ensemble de ce convoyeur.

Les efforts de traction exercés sélectivement par les vérins 55a, 55b étant très importants, il n'est malheureusement pas exclu que la chaîne qui relie entre eux ces deux vérins en passant autour du pignon 49 puisse casser.

On comprendra que la présence du carter de protection 59 assure qu'en cas de rupture la chaîne reste à l'intérieur du bras de support 43, permettant ainsi d'éviter tout coup de fouet préjudiciable à la sécurité d'un opérateur.

On notera en outre que la butée fixe 61 permet d'éviter qu'en cas de rupture la chaîne s'enroule autour du pignon 49.

On comprend donc que les effets combinés de cette butée 61 et du carter de protection 59 permettent de bloquer la rotation du pignon 49 en cas de rupture de la chaîne.

On se prémunit de la sorte contre tout mouvement de rotation incontrôlé du convoyeur 5 autour de l'axe vertical A2.

Bien entendu, la présente invention n'est pas limitée au mode de réalisation décrit et représenté fourni à titre d'exemple illustratif et non limitatif.

## Revendications

1. Dispositif (39) pour faire pivoter un convoyeur autour d'un axe (A2) sensiblement vertical, comprenant :
- un bras de support (43) dudit convoyeur,
- un palier (47) d'axe (A2) sensiblement vertical monté sur ledit bras de support (43) et apte à recevoir une embase de section circulaire dudit convoyeur,
- un pignon (49) de même axe (A2) que celui dudit palier (47), apte à être monté rotatif dans ledit bras de support (43) et fixe en rotation sur ledit axe vertical de support dudit convoyeur,
- une chaîne s'enroulant autour dudit pignon (49),
- des moyens (55a, 55b) pour tirer sélectivement sur ladite-chaine dans un sens ou dans l'autre, **caractérisé en ce qu'**il comprend
- un carter (59) de protection de ladite chaîne de manière que cette dernière se trouve emprisonnée dans le bras de support (43) du dispositif (3a) et elle ne peut pas effectuer de coup de fouet en cas de rupture.

2. Dispositif (39) selon la revendication 1, dans lequel ledit bras de support (43) comprend une gorge (51) à l'intérieur de laquelle ladite chaîne est susceptible de circuler, et ledit carter (59) recouvre ladite gorge (51) et ledit pignon (49).

3. Dispositif (39) selon l'une des revendications 1 ou 2, comprenant une butée fixe (61) disposée dans l'espace sans chaîne (E) séparant ledit bras de support (43) dudit pignon (49), au voisinage des dents (49a, 49b) de ce pignon (49).

4. Dispositif (39) selon l'une quelconque des revendications précédentes, dans lequel ledit pignon (49) comprend deux rangées de dents (49a, 49b) et ladite chaîne est adaptée pour coopérer simultanément avec lesdites deux rangées de dents (49a, 49b).

5. Dispositif (39) selon les revendications 3 et 4, dans lequel ladite butée fixe (61) est disposée entre lesdites deux rangées de dents (49a, 49b).

6. Dispositif (39) selon l'une quelconque des revendications précédentes, dans lequel lesdits moyens de traction sélective comprennent deux vérins (55a, 55b) aptes à exercer des efforts de traction antagonistes sur ladite chaîne.

7. Dispositif (39) selon l'une quelconque des revendications précédentes, comprenant un portique (41) de liaison dudit bras de support (43) à un véhicule du type bétonnière (1), sur lequel ledit bras (43) est monté pivotant autour d'un axe vertical (A1), et des moyens (45) pour faire pivoter sélectivement ledit bras de support (43) par rapport audit portique (41).

8. Convoyeur (5) équipé d'un dispositif conforme à l'une quelconque des revendications précédentes.

9. Véhicule du type bétonnière (1) équipé d'un convoyeur (5) conforme à la revendication 8.

## Claims

1. Device (39) for pivoting a conveyor through a generally vertical axis (A2), comprising:
- 1- a supporting arm (43) for the said conveyor,
- 2- a bearing (47) for the generally vertical axis (A2) mounted on the said supporting arm (43) and able to receive a base piece of the said conveyor with a circular cross-section,
- a gear wheel (49) in the same axis (A2) as that of the said bearing (47), capable of being mounted in a rotating manner in the said supporting arm (43) and secured in a rotating manner on the said vertical axis of the support of the said conveyor,
- 3- a chain wound around the said gear wheel (49), and
- 4- a means (55a, 55b) by which the said chain can be pulled selectively in either direction, **characterised in that** it comprises a protective casing (59) for the said chain in such a way that this latter is held securely in the supporting arm (43) of the device (39) and is unable to produce a whiplash effect in the event of it being broken.

2. Device (39) in accordance with Claim 1 above, in which the said supporting arm (43) comprises a groove (51), along which the said chain can travel, and the said casing (59) encloses the said groove (51) and the said gear wheel (49).

3. Device (39) in accordance with Claim 1 or 2 above comprising a fixed thrust block (61) placed in the space without the chain (E) separating the said supporting arm (43) of the gear wheel (49) in the vicinity of the teeth (49a, 49b) of the gear wheel (49).

4. Device (39) in accordance with any one of the above claims, in which the said gear wheel (49) comprises two rows of gear teeth (49a, 49b) and the said chain is arranged in such a way that it acts simultaneously with the said two rows of gear teeth (49a, 49b).

5. Device (39) in accordance with claims 3 and 4 above in which the said thrust block (61) is arranged between the two rows of gear teeth (49a, 49b).

6. Device (39) in accordance with any of the above claims, in which the said selective traction means_comprise two jacks (55a, 55b), which are capable of applying antagonistic tensile forces to the said chain.

7. Device (39) in accordance with any of the above claims, comprising a mounting bracket (41) adapted in such a manner that the said supporting arm (43) can be connected to a lorry such as a cement-mixer (1), on which the said arm (43) is mounted in such a way that it pivots around a vertical axis (A1) and means (45) of making the said supporting arm (43) pivot in relation to the said bracket (41).

8. A conveyor (5) provided with a device in accordance with any of the above claims.

9. A lorry such as a cement-mixer (1) comprising a conveyor in accordance with claim 8 above.

## Patentansprüche

1. Vorrichtung (39), um einen Förderer um eine im Wesentlichen vertikale Achse (A2) zu drehen, umfassend:
- einen Tragarm (43) dieses Förderers,
- ein Lager (47) mit der im Wesentlichen vertikalen Achse (A2), das an diesem Tragarm (43) montiert ist und geeignet ist, eine Grundplatte des Förderers mit kreisrundem Querschnitt aufzunehmen,
- einen Ritzel (49) mit derselben Achse (A2) wie die des Lagers (47), der geeignet ist, drehbar in den Tragarm (43) montiert zu werden und in der vertikalen Tragachse des Förderers nicht drehbar ist,
- eine Kette, die um diesen Ritzel (49) geführt ist,
- Mittel (55a, 55b), um diese Kette auf selektive Weise in eine Richtung oder in die andere zu ziehen,
**dadurch gekennzeichnet, dass** sie ein Schutzgehäuse für die Kette umfasst, derart, dass diese Letztere im Tragarm (43) der Vorrichtung (39) eingeschlossen ist und sie im Falle eines Risses keinen Peitschenhieb verursachen kann.

2. Vorrichtung (39) nach Anspruch 1, wobei der Tragarm (43) eine Kehle (51) umfasst, in welcher die Kette umlaufen kann, und das Gehäuse (59) diese Kehle (51) und den Ritzel (49) bedeckt.

3. Vorrichtung (39) nach einem der Ansprüche 1 oder 2, umfassend einen Festanschlag (61), der im kettenlosen Raum (E), der den Tragarm (43) vom Ritzel (49) trennt, in der Nachbarschaft der Zähne (49a, 49b) des Ritzels (49) angeordnet ist.

4. Vorrichtung (39) nach einem der vorherigen Ansprüche, wobei der Ritzel (49) zwei Zahnreihen (49a, 49b) umfasst und die Kette geeignet ist, gleichzeitig mit diesen zwei Zahnreihen (49a, 49b) zusammenzuwirken.

5. Vorrichtung (39) nach den Ansprüchen 3 und 4, wobei der Festanschlag (61) zwischen den zwei Zahnreihen (49a, 49b) angeordnet ist.

6. Vorrichtung (39) nach einem der vorherigen Ansprüche, wobei die selektiven Zugmittel zwei Zylinder (55a, 55b) umfassen, die geeignet sind, entgegengesetzte Zugkräfte auf die Kette auszuüben.

7. Vorrichtung (39) nach einem der vorherigen Ansprüche, umfassend einen Tragrahmen (41) zum Verbinden des Tragarms (43) mit einem Fahrzeug vom Typ Betonmischer (1), auf welchem der Tragarm (43) um eine vertikale Achse (A1) herum drehbar montiert ist, und Mittel (45), um den Tragarm (43) auf selektive Weise relativ zum Tragrahmen (41) zu drehen.

8. Förderer (5), der mit einer Vorrichtung nach einem der vorherigen Ansprüche ausgerüstet ist.

9. Fahrzeug vom Typ Betonmischer (1), der mit einem Förderer (5) nach Anspruch 8 ausgerüstet ist.
